# EUROPÄISCHE PATENTSCHRIFT

(11) **EP 0 811 961 B1**
(45) Veröffentlichungstag und Bekanntmachung des Hinweises auf die Patenterteilung: **08.05.2002**
(21) Anmeldenummer: 97101245.5
(22) Anmeldetag: 28.01.1997
(51) Int. Cl.: G08G 1/0969

(54) **Verfahren zur Aufbereitung von dem Führer eines Fahrzeugs zu übermittelnder Wegleitinformation**
Method to prepare a driver to receive guiding information
Méthode pour préparer un conducteur de véhicule à recevoir l'information de guidage

(30) Priorität: 05.06.1996 DE 19622527
(43) Veröffentlichungstag der Anmeldung: 10.12.1997
(73) Patentinhaber: VDO Adolf Schindling AG, 60326 Frankfurt/Main (DE)
(72) Erfinder: Schmischke, Kai, 63543 Neuberg 1 (DE); Helmstädter, Gerald, 64331 Weiterstadt (DE)
(74) Vertreter: Klein, Thomas, Dipl.-Ing. (FH)

(56) Entgegenhaltungen:
- US-A- 5 430 655
- AUTOMOTIVE ENGINEERING, Bd. 104, Nr. 5, 1.Mai 1996, Seiten 71-75, XP000591336 "INTELLIGENT NAVIGATION SYSTEMS"
- IEEE SPECTRUM, Bd. 32, Nr. 3, 1.März 1995, Seiten 37-41, 44 - 48, XP000505503 "THE ELECTRONIC MOTORIST"
- PROCEEDINGS OF THE VEHICLE NAVIGATION AND INFORMATION SYSTEMS CONFERENCE. (VNIS), TORONTO, SEPT. 11 - 13, 1989, Nr. CONF. 1, 11.September 1989, REEKIE D;CASE E; TSAI J, Seiten A09-A14, XP000089918 ZAVOLI W B: "NAVIGATION AND DIGITAL MAPS INTERFACE FOR FLEET MANAGEMENT AND DRIVER INFORMATION SYSTEMS"

## Beschreibung

Die Erfindung betrifft ein Verfahren zur Aufbereitung von dem Führer eines Fahrzeugs zu übermittelnder Wegleitinformation in Form von Hinweisen zum Abbiegen an Wegleitpunkten, wobei mittels einer gespeicherten Straßenkarte eine über Wegleitpunkte führende Route zu einem Ziel ermittelt wird, die als Sollroute dem Führer des Fahrzeugs vorgegeben wird.

Ein solches Verfahren ist aus der US-A-5 430 655 bekannt.

Zur Zielführung eines Kraftfahrzeugs sind verschiedene Verfahren und Geräte bekannt geworden. Dabei wird nach dem Ermitteln einer Sollroute während der Fahrt dem Führer des Fahrzugs eine Wegleitinformation übermittelt. Diese besteht beispielsweise darin, dass auf einer Anzeigevorrichtung (Display) ein Richtungswechsel (Abbiegen) bei einer vorausliegenden Kreuzung oder Abzweigung angezeigt wird. Zusätzlich oder anstelle der optischen Anzeige kann auch eine Sprachausgabe vorgesehen sein, beispielsweise in der Form "rechts abbiegen" oder "links abbiegen".

Damit eine Zuordnung der Anzeige- oder Sprachausgabe zu dem jeweiligen Wegleitpunkt möglich ist, erfolgt die Anzeige eine vorgegebene Entfernung vor dem Wegleitpunkt, beispielsweise 200 m. Diese Entfernung wird durch einen Vergleich zwischen der Position des Wegleitpunktes und der jeweils mit Hilfe eines Ortungsgerätes festgestellten Position des Fahrzeugs ermittelt. Die Positionsbestimmung ist jedoch mit Toleranzen von beispielsweise 100 m behaftet, so daß bei einer relativ späten Anzeige der Führer möglicherweise nicht mehr reagieren kann und bei einer zu früh erfolgenden Anzeige der Führer eventuell in eine vor dem Wegleitpunkt abzweigende Straße einbiegt.

Aufgabe des erfindungsgemäßen Verfahrens ist es, dem Führer eines Fahrzeugs auch bei dicht aufeinanderfolgenden abzweigenden Straßen eindeutige Hinweise zum Abbiegen zu geben.

Diese Aufgabe wird bei dem erfindungsgemäßen Verfahren dadurch gelöst, daß bei Annäherung an einen Wegleitpunkt, bei welchem dem Führer ein Abbiegen von der jeweils befahrenen Straße vorgegeben ist, mit Hilfe der gespeicherten Straßenkarte geprüft wird, ob vor dem Wegleitpunkt eine oder mehrere Straßen nach der gleichen Seite wie das vorgegebene Abbiegen abzweigen, die zum Wegleitpunkt bzw. untereinander einen kleineren Abstand als eine vorgegebene Entfernung aufweisen, und daß zutreffendenfalls alle zu dem Zeitpunkt der Übermittlung der Wegleitinformation an den Führer zwischen dem Fahrzeug und dem Wegleitpunkt liegenden zur gleichen Seite abzweigenden Straßen in die Wegleitinformation einbezogen werden.

Das erfindungsgemäße Verfahren ermöglicht in einfacher Weise eindeutige Hinweise zum Abbiegen, auch wenn abzweigende Straßen dichter als der Toleranzbereich des Ortungsgerätes vor derjenigen Straße liegen, in die eingebogen werden soll - im folgenden auch Zielstraße genannt. Außerdem ermöglicht das erfindungsgemäße Verfahren eine frühzeitige Ausgabe der Hinweise, so daß der Führer sich auf die Richtungsänderung rechtzeitig einstellen kann. Nach der Informationsübermittlung bleibt es dem Führer überlassen, in die "richtige" Straße einzubiegen.

Vorzugsweise ist bei dem erfindungsgemäßen Verfahren vorgesehen, daß die vorgegebene Entfernung dem Toleranzbereich eines die jeweilige Position des Fahrzeuges ermittelnden Ortungssystems entspricht.

Eine vorteilhafte Ausgestaltung des erfindungsgemäßen Verfahrens besteht darin, daß die Prüfung des jeweiligen Abstandes mit der ersten abzweigenden Straße vor dem Wegleitpunkt beginnt und so lange mit weiteren abzweigenden Straßen wiederholt wird, bis eine abzweigende Straße zur benachbarten zuvor geprüften Straße einen größeren Abstand als die vorgegebene Entfernung aufweist, und daß die Anzahl der abzweigenden Straßen mit geringerem Abstand angezeigt wird.

Die Übermittlung der Wegleitinformation an den Führer des Fahrzeugs kann bei dem erfindungsgemäßen Verfahren auf verschiedene Weisen erfolgen. Eine vorteilhafte Ausgestaltung des erfindungsgemäßen Verfahrens besteht darin, daß die Übermittlung der Wegleitinformation mit Hilfe einer optischen Anzeigevorrichtung mit einem Abbiegepfeil und weiteren Linien für die abzweigenden Straßen erfolgt. Es kann jedoch auch vorgesehen sein, daß die Übermittlung der Wegleitinformation akustisch durch eine Sprachansage erfolgt.

Die Erfindung läßt zahlreiche Ausführungsformen zu. Eine davon ist schematisch in der Zeichnung anhand mehrerer Figuren dargestellt und nachfolgend beschrieben. Es zeigt:
- Fig. 1: einen Ausschnitt aus einer Straßenkarte zur Erläuterung des erfindungsgemäßen Verfahrens,
- Fig. 2: ein Ablaufdiagramm und
- Fig. 3: ein Ausführungsbeispiel für eine Einrichtung zur Durchführung des erfindungsgemäßen Verfahrens.

Ein Fahrzeug 1 befährt eine Straße 2 und nähert sich dabei einem Wegleitpunkt P(n). Die Sollroute biegt an dieser Stelle in eine Zielstraße 3 ein, was dem Führer angezeigt werden soll. Eine Entfernung a₀ vor der Zielstraße 3 biegt eine Straße 4 von der Straße 2 rechts ab. Eine weitere Straße 5 biegt ebenfalls rechts ab und weist zur Straße 4 eine Entfernung a₁. Das Fahrzeug 1 befindet sich in einer Entfernung a₂ vor der Straße 5. Da die Entfernung zwischen dem Fahrzeug 1 und dem Wegleitpunkt P(n) nur mit einer im Verhältnis zu den Abständen zwischen den dargestellten Querstraßen groben Toleranz ermittelt werden kann, ist es allein aufgrund der Positionsbestimmung nicht möglich, den richtigen Hinweis zum Abbiegen auszugeben - im vorliegenden Fall "dritte Straße rechts abbiegen".

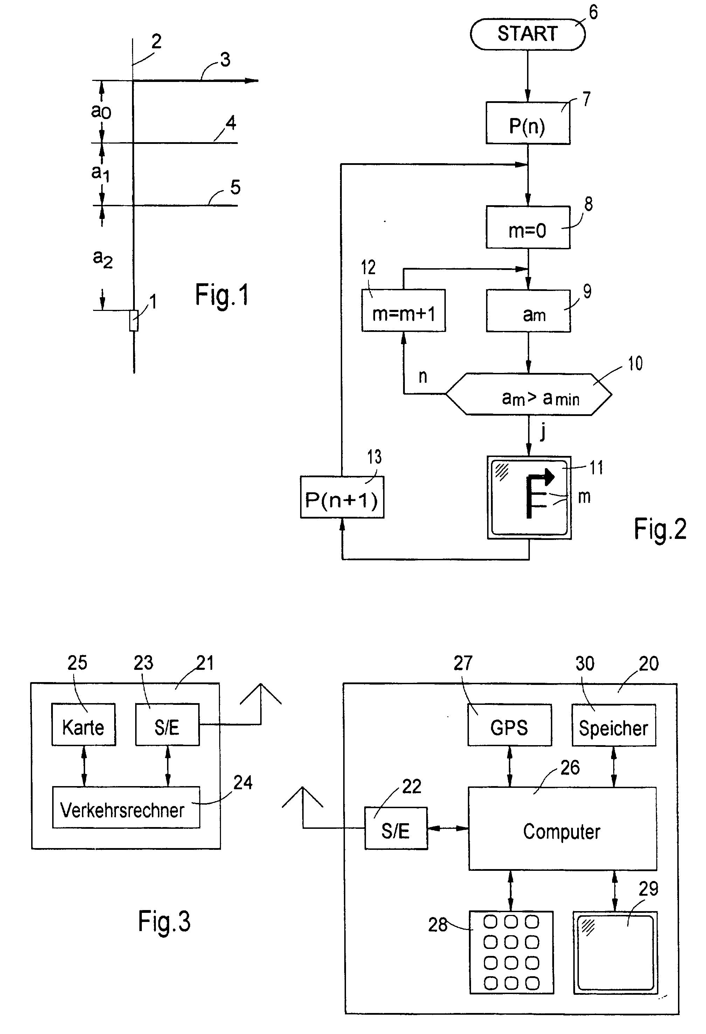

Mit dem in Fig. 2 dargestellten erfindungsgemäßen Verfahren wird nach einem Start bei 6 zunächst der Wegleitpunkt P(n) bei 7 ausgewählt und der Index m bei 8 auf Null gesetzt. Im Programmteil 9 wird abgefragt, wie groß der Abstand aₘ zwischen der Zielstraße 2 und der zuvor abzweigenden Straße 4 bzw. zwischen den weiteren Querstraßen ist. Bei 10 wird der Abstand aₘ mit einem Mindestabstand aₘᵢₙ verglichen. Solange aₘ nicht größer als aₘᵢₙ ist, wird m bei 12 inkrementiert und in den Programmteilen 9 und 10 der Abstand zur nächsten Querstraße geprüft.

Ist aₘ jedoch größer als der Mindestabstand, kann angenommen werden, daß sich zwischen dem Fahrzeug 1 und dem Wegleitpunkt P(n) keine weiteren abzweigenden Straßen befinden. Die Zahl m wird an ein Programmteil 11 übergeben, in welchem ein Rechtsabbiegepfeil mit der entsprechenden Anzahl von zuvor abzweigenden Straßen erzeugt und auf der Anzeigeeinrichtung wiedergegeben wird. Anschließend wird bei 13 der nächste Wegleitpunkt P(n+1) ermittelt, worauf das Programm wiederholt wird.

Das als Blockschaltbild in Fig. 3 dargestellte Ausführungsbeispiel einer erfindungsgemäßen Einrichtung besteht aus einer Fahrzeugeinheit 20 und einer zentralen Einrichtung 21, zwischen denen mit jeweils einem Sender/Empfänger 22, 23 eine Funkverbindung besteht, beispielsweise nach dem GSM-Standard. In der zentralen Einrichtung 21 befindet sich ein Verkehrsrechner 24, der Zugriff auf eine gespeicherte Straßenkarte 25 hat und für viele Fahrzeuge die Routenermittlung vornimmt.

Die Fahrzeugeinheit 20 besteht im wesentlichen aus einem Bordcomputer 26, einem GPS-Empfänger 27, einer Eingabeeinrichtung 28, einer Anzeigeeinrichtung 29 und einem Speicher 30. Diese Komponenten sind an sich bekannt und brauchen zum Verständnis der Erfindung nicht näher erläutert zu werden. Der GPS-Empfänger 27 führt dem Bordcomputer 26 ständig Informationen über die geographische Position des Fahrzeugs zu. Mit der Eingabeeinrichtung 28 kann der Führer des Fahrzeugs ein Ziel eingeben. Dieses wird zusammen mit der gegenwärtigen Position dem Verkehrsrechner 24 zugeführt, der anhand der Straßenkarte 25 die Sollroute ermittelt und an die Fahrzeugeinheit 20 in Form einer Wegleitpunktliste überträgt. Zur Durchführung des erfindungsgemäßen Verfahrens berechnet der Verkehrsrechner außerdem zu den einzelnen Wegleitpunkten Abstände zu vor den Wegleitpunkten abzweigenden Querstraßen, die ebenfalls zur Fahrzeugeinheit übertragen werden.

Durch die Positionsmeldungen des GPS-Empfängers 27 wird dem Bordcomputer mitgeteilt, in wieweit Wegleitpunkte erreicht werden, so daß die Anzeigeeinrichtung 29 Wegleitinformationen für den jeweils vorausliegenden Wegleitpunkt anzeigt.

## Patentansprüche

1. Verfahren zur Aufbereitung von dem Führer eines Fahrzeugs zu übermittelnder Wegleitinformation in Form von Hinweisen zum Abbiegen an Wegleitpunkten (P(n), P(n+1)), wobei mittels einer gespeicherten Straßenkarte (25) eine über Wegleitpunkte (P(n), P(n+1)) führende Route zu einem Ziel ermittelt wird, die als Sollroute dem Führer des Fahrzeugs vorgegeben wird, **dadurch gekennzeichnet, dass** bei Annäherung an einen Wegleitpunkt (P(n)), bei welchem dem Führer ein Abbiegen von der jeweils befahrenen Straße (2) vorgegeben ist, mit Hilfe der gespeicherten Straßenkarte (25) geprüft wird, ob vor dem Wegleitpunkt (P(n)) eine oder mehrere Straßen (4, 5) nach der gleichen Seite wie das vorgegebene Abbiegen abzweigen, die zum Wegleitpunkt (P(n)) bzw. untereinander einen kleineren Abstand (aₘ) als eine vorgegebene Entfernung (aₘᵢₙ) aufweisen, und dass zutreffendenfalls alle zu dem Zeitpunkt der Übermittlung der Wegleitinformation an den Führer zwischen dem Fahrzeug und dem Wegleitpunkt (P(n)) liegenden zur gleichen Seite abzweigenden Straßen in die Wegleitinformation einbezogen werden.

2. Verfahren nach Anspruch 1, **dadurch gekennzeichnet, dass** die vorgegebene Entfernung dem Toleranzbereich eines die jeweilige Position des Fahrzeuges ermittelnden Ortungssystems entspricht.

3. Verfahren nach einem der Ansprüche 1 oder 2, **dadurch gekennzeichnet, dass** die Prüfung des jeweiligen Abstandes mit der ersten abzweigenden Straße (4) vor dem Wegleitpunkt (P(n)) beginnt und so lange mit weiteren abzweigenden Straßen (5) wiederholt wird, bis eine abzweigende Straße zur benachbarten zuvor geprüften Straße einen größeren Abstand (aₘ) als die vorgegebne Entfernung (aₘᵢₙ) aufweist, und dass die Anzahl der abzweigenden Straßen mit geringerem Abstand angezeigt wird.

4. Verfahren nach einem der vorhergehenden Ansprüche, **dadurch gekennzeichnet, dass** die Übermittlung der Wegleitinformationen mit Hilfe einer optischen Anzeigevorrichtung (29) mit einem Abbiegepfeil und weiteren Linien für die abzweigenden Straßen erfolgt.

5. Verfahren nach einem der Ansprüche 1 bis 3, **dadurch gekennzeichnet, dass** die Übermittlung der Wegleitinformation akustisch durch eine Sprachansage erfolgt.

## Claims

1. Method for conditioning routing information, to be transmitted to the driver of a vehicle, in the form of instructions for turning at routing points (P(n), P(n+1)), a route leading via routing points (P(n), P(n+1)) to a destination, which is prescribed to the driver of a vehicle as a specified route, being determined using a stored road map (25), **characterized in that**, when the driver approaches a routing point (P(n)) at which the driver is issued with a prescription to turn off from the road (2) on which he is respectively travelling, a check is made using the stored road map (25) to determine whether, before the routing point (P(n)), one or more roads (4, 5), which are at a smaller distance (aₘ) from the routing point (P(n)) or from one another than a predefined distance (aₘᵢₙ), branch off towards the same side as the predefined turning-off operation , and **in that**, if this is the case, all the roads which are situated between the vehicle and the routing point (P(n)) at the time when the routing information is transmitted to the driver and which branch off towards the same side are included in the routing information.

2. The method as claimed in Claim 1, **characterized in that** the prescribed distance corresponds to the tolerance range of a locating system which determines the respective position of the vehicle.

3. The method as claimed in one of Claims 1 or 2, **characterized in that** the checking of the respective distance starts with the first road (4) which branches before the routing point (P(n)) and it is repeated with further roads (5) which branch off, until a road which branches off to the adjacent, previously checked road is at a greater distance (aₘ) than the prescribed distance (aₘᵢₙ), and **in that** the number of roads which branch off and which are at a smaller distance is indicated.

4. The method as claimed in one of the preceding claims, **characterized in that** the transmission of the routing information is carried out using a visual display device (29) with a turning-off arrow and further lines for the roads which branch off.

5. The method as claimed in one of Claims 1 to 3, **characterized in that** the transmission of the routing information is carried out audibly by means of a voice announcement.

## Revendications

1. Procédé pour la préparation d'une information d'orientation qu'il s'agit de transmettre au conducteur d'un véhicule sous la forme d'instructions de tourner à des points d'orientation (P (n), P(n+1), dans lequel, au moyen d'un plan de rues (25) mémorisé, on détermine un itinéraire conduisant à un but en passant par des points d'orientation (P (n), P(n+1), qui est prescrit au conducteur du véhicule en tant qu'itinéraire de consigne, **caractérisé en ce que**, lorsqu'on s'approche d'un point d'orientation (P(n)) où il est prescrit au conducteur de quitter la rue (2) qu'il parcourt au moment considéré, on vérifie au moyen du plan de rues (25) mémorisé si, en amont du point d'orientation (P(n)), une ou plusieurs rues (4, 5) s'embranchent du même côté que le virage prescrit, et qui se trouvent à une distance du point d'orientation (P(n)), ou d'écartement mutuel, (aₘ) inférieure à une distance prescrite (aₘᵢₙ) et **en ce que**, dans l'affirmative, toutes les rues qui s'embranchent du même côté et qui se trouvent entre le véhicule et le point d'orientation (P(n)) à l'instant de la transmission de l'information de guidage au conducteur, sont prises en compte dans l'information de guidage.

2. Procédé selon la revendication 1, **caractérisé en ce que** la distance prescrite correspond à la plage de tolérance d'un système de localisation qui calcule la position considérée du véhicule.

3. Procédé selon l'une des revendications 1 ou 2, **caractérisé en ce que** la vérification de la distance considérée commence à la première rue (4) qui s'embranche en amont du point d'orientation (P(n)) et est répétée avec d'autres rues (5) qui s'embranchent, jusqu'à ce qu'une rue qui s'embranche se trouve à une distance (aₘ) de la rue adjacente vérifiée précédemment qui est supérieure à la distance prescrite (aₘᵢₙ) et **en ce que** le nombre des rues qui s'embranchent à une plus faible distance est indiqué.

4. Procédé selon l'une des revendications précédentes, **caractérisé en ce que** la transmission de l'information de guidage s'effectue à l'aide d'un dispositif indicateur optique (29) qui comporte une flèche de virage et d'autres lignes pour les rues qui s'embranchent.

5. Procédé selon l'une des revendications 1 à 3, **caractérisé en ce que** la transmission de l'information de guidage s'effectue acoustiquement, par une indication vocale.
